# EUROPÄISCHE PATENTSCHRIFT

(11) **EP 1 110 718 B1**
(45) Veröffentlichungstag und Bekanntmachung des Hinweises auf die Patenterteilung: **01.12.2004**
(21) Anmeldenummer: 99811204.9
(22) Anmeldetag: 23.12.1999
(51) Int. Cl.: B32B 31/26, B32B 15/08, B65D 65/40

(54) **Verfahren zur Herstellung einer mit Kunststoff beschichteten Aluminiumfolie**
Process to produce a plastic coated aluminiumn foil
Procédé pour produire une feuille d'aluminium revêtue de plastique

(43) Veröffentlichungstag der Anmeldung: 27.06.2001
(73) Patentinhaber: Alcan Technology & Management AG, 8212 Neuhausen am Rheinfall (CH)
(72) Erfinder: Nägeli, Hans-Rudolf, 8212 Neuhausen am Rheinfall (CH); Kolb, Franz, 78239 Rielasingen-Worblingen (DE); Hammon, Werner, 78333 Stockach (DE); Hartmann, Werner, 78247 Hilzingen (DE)

(56) Entgegenhaltungen:
- EP-A- 0 312 309
- EP-A- 0 402 004
- EP-A- 0 551 921
- EP-A- 0 875 298
- DE-A- 4 218 369
- US-A- 5 407 702

## Beschreibung

Die Erfindung betrifft ein Verfahren zur Herstellung einer mit siegel- und sterilisierbarem Kunststoff auf der Basis von Polypropylen (PP) oder Polyethylen (PE) beschichteten Aluminiumfolie nach dem Oberbegriff von Anspruch 1.

Zur Verpackung von Tiernahrung sind Behälter in der Form von Dosen oder Schalen mit einem auf dem Behälterrand aufgesiegelten peelbaren Deckel bekannt. Die als Verpackungsmaterial verwendete Aluminiumfolie ist aus Gründen der Siegel- und Sterilisierbarkeit auf der späteren Behälterinnenseite mit PP beschichtet. Derartige Behälter bzw. die zu deren Herstellung eingesetzte PP-beschichtete Aluminiumfolie sind unter dem Markennamen STERALCON® bekannt. Die bisherige Herstellung der PP-beschichteten Aluminiumfolie erfolgte über eine lösemittelbasierende Lackkaschierung mit einem PP-Castfilm. Hierbei wird ein lösemittelbasierender Kleber, beispielsweise ein Polyurethankleber, in einem Durchlaufofen durch Abdampfen des Lösemittels getrocknet und die mit Kleber beschichtete Aluminiumfolie nachfolgend zwischen zwei Walzen mit dem PP-Castfilm zur beschichteten Aluminiumfolie verbunden. Der als Haftvermittler eingesetzte Kaschierkleber entwickelt in verhältnismässig kurzer Zeit eine ausreichende Haftkraft, die zu einer Siegelnahtfestigkeit nach DIN 53539 von mehr als 5 N/15mm führt.

Die Herstellung einer PP-beschichteten Aluminiumfolie durch Lackkaschieren der Folie mit einem PP-Castfilm ist verhältnismässig teuer. Es wurden daher schon Versuche unternommen, die Lackkaschierung mit einem PP-Castfilm durch eine Coextrusionsbeschichtung mit PP zu ersetzen. Bei der heutigen Coextrusionsbeschichtungstechnologie ist jedoch zur Erzielung einer ausreichenden Haftung eine Wärmenachbehandlung erforderlich. Diese führt zu einer Nachkristallisation der PP-Schicht, was zu erhöhter Anhaftung des feuchten bzw. nassen Füllgutes führt. Demzufolge verschlechtern sich die Stülpeigenschaften, d.h. die in der Form eines zusammenhängenden Blockes vorliegende Tiernahrung lässt sich nicht mehr einfach durch Umkehren des Behälters und durch leichten Druck mit dem Daumen von der Bodenseite her ohne zusätzliche Hilfsmittel aus dem Behälter entfernen. Ebenso bleibt aus demselben Grund das feuchte bzw. nasse Füllgut am Deckel haften bzw. kleben. Gerade die Stülpeigenschaft und die saubere Trennung der Tiernahrung vom Deckel beim Öffnen des Behälters wird aber vom Kunden, der seiner Katze oder seinem Hund die Nahrung in Form des ganzen Blockes präsentieren will, erwartet.

Neben dem negativen Einfluss auf die Stülpeigenschaften und dem Anhaften führt die durch die Nachtemperung hervorgerufene höhere Kristallinität der PP-Schicht bei der Umformung der beschichteten Aluminiumfolie zu Behältern zu sogenanntem Weissbruch im Polymer, was die Beständigkeit der Innenseite des Behälters bei aggressivem Füllgut erheblich vermindert. Die reduzierte Beständigkeit kann zur Ablösung der Beschichtung und damit zur Korrosion des darunter liegenden Metalls führen, wobei auch schon eine bloss optische Beeinträchtigung vom Kunden nicht akzeptiert wird.

Die Unannehmlichkeiten treten bei der lackkaschierten Aluminiumfolie aufgrund der weitgehend amorphen Oberflächenstruktur des PP-Castfilms nicht auf.

Ein Verfahren der eingangs genannten Art ist aus der DE-A-4 218 369 bekannt.

Der vorliegenden Erfindung liegt die Aufgabe zugrunde, ein Verfahren der eingangs genannten Art zu schaffen mit welchem die Haftfestigkeit zwischen der Aluminiumfolie und der Kunststoffschicht erhöht werden kann, wobei die mit dem erfindungsgemässen Verfahren hergestellten beschichteten Aluminiumfolien bzw. daraus hergestellte Behälter und Deckel für Tiernahrung bezüglich ihrer Stülpeigenschaften, Anhaftung und Beständigkeit gegen aggressive Füllgüter mit den lackkaschierten Folien nach dem Stand der Technik vergleichbar gute Eigenschaften aufweisen sollen.

Zur erfindungsgemässen Lösung der Aufgabe führt ein Verfahren mit den Merkmalen von Anspruch 1.

Der wesentliche Kern der Erfindung liegt somit in der Kombination der Durchführung des unmittelbar nach der Coextrusion mit dem Haftvermittler mit der Aluminiumfolie zusammengeführten Kunststoffs durch einen Ofen und der schockartigen Abkühlung der Oberfläche der Kunststoffschicht zur Verminderung der Nachkristallisation, d.h. die Erhaltung einer überwiegend amorphen Oberflächenstruktur, wie sie bei PP-Castfilmen vorliegt.

Als Kunststoffe auf der Basis von Polypropylen (PP) oder Polyethylen (PE) werden hier im folgenden sowohl die reinen Polymere, die üblicherweise als PP-homo bzw. PE-homo bezeichnet werden, als auch modifizierte Polymere mit einem überwiegenden Anteil an PP bzw. PE verstanden. Der Begriff "modifizierte Polymere" umfasst beispielsweise die als "random" bezeichneten Cooder Terpolymere mit beispielsweise Ethylen als weiteren Monomeranteil sowie die mit dem Begriff "block" bezeichneten Co- oder Terpolymere oder PP Blends mit anderen Kunststoffen, insbesondere mit Polyethylenen, oder mit Füllstoffen. Weitere Beispiele sind die dichtemodifizierten Polyethylene wie LDPE und HDPE. Generell zeigen die Polyethylene ein mit den Polypropylenen vergleichbares Verhalten bezüglich Kristallinität. Der hier für die Nachkristallisation der PP- und PE-Schichten massgebende Kennwert ist der Kristallitschmelzpunkt des Polymers, welcher den Übergang eines Thermoplasten aus seinem viskosen geschmolzenen in den durch eine Kristallisation charakterisierten Übergang in den festen Zustand definiert. Die Kristallitschmelzpunkte für PP liegen bei etwa 160°C, für PE je nach Dichte, zwischen 100°C und 140°C. Mit dem Begriff schockartige Abkühlung" soll zum Ausdruck gebracht werden, dass der an den Kristallitschmelzpunkt angrenzende Temperaturbereich so rasch durchlaufen wird, dass einerseits ein wesentlicher Teil des Oberflächenbereiches der Kunststoffschicht in einem amorphen Zustand verbleibt und andererseits die Unterkühlung so stark ist, dass die in geringem Mass auskristallisierenden Kristallite oder Sphärolite möglichst fein sind. Die sich an der Oberfläche der Kunststoffschicht ausbildende Struktur führt aufgrund des geringen Anteils an Kristalliten zu einer wirkungsvollen Unterdrükkung der oben beschriebenen Anhaftung von Tiernahrung, was zu guten Stülpeigenschaften und reduziertem Anhaften der aus der beschichteten Folie hergestellten Verpackungsbehälter und Deckel führt. Die äusserst geringe Grösse der Kristallite und der hohe Anteil an amorphem Material verhindern im wesentlichen auch im Umformbereich die Ausbildung von Weissbruch.

Geeignete Haftvermittler sind z.B. haftungsfreudig modifizierte Co- und Terpolymeren mit Ethylen (E) oder Propylen (P) als einer der Monomerkomponenten, insbesondere E.AA, E.MAA, E.VA, E.MA, E.EA, E.nBA, E.CO, E.VA.CO, E.nBA.CO, E.AE.AA, P.MAH, lonomere und dergleichen, wobei bevorzugt P.MAH eingesetzt wird.

Die genannten Monomerkomponenten bedeuten:
- AA: Acrylsäure
- AE: Acrylester (MA, EA, BA)
- nBA: n-Butylacrylat
- CO: Kohlenmonoxid
- EA: Ethylacrylat
- MA: Methylacrylat
- MAA: Methylacrylsäure
- MAH: Maleinsäureanhydrid
- VA: Vinylacetat

Die Festlegung der zur Erzielung der genannten Eigenschaften erforderlichen Abkühlungsgeschwindigkeiten sowie der unteren Grenze des Temperaturbereiches, welcher rasch durchlaufen werden muss, lässt sich von einem Fachmann anhand einiger weniger Versuche für die entsprechende Dimensionierung einer Abkühlstation auf einfache Weise ermitteln.

Die Temperatur des Ofens liegt mindestens 20°C über dem Kristallitschmelzpunkt des jeweiligen Polymers. Auch die Starttemperatur für die schockartige Abkühlung der Kunststoffschicht liegt über dem Kristallitschmelzpunkt des Kunststoffes, wobei die Endtemperatur der schockartigen Abkühlung mindestens 40° unter dem Kristallitschmelzpunkt liegt.

Bevorzugt liegt die schockartige Abkühlung mindestens 80°C, vorzugsweise mindestens 100°C, unter dem Kristallitschmelzpunkt des Kunststoffes.

Die schockartige Abkühlungsgeschwindigkeit der Kunststoffschicht ist grösser als 10°C/sec, bevorzugt grösser als 50°C/sec, insbesondere grösser als 100°C/sec.

Die schockartige Abkühlung der Kunststoffschicht kann beispielsweise durch teilweise Umschlingung wenigstens einer gekühlten Walze durchgeführt werden. Weitere Möglichkeiten zur schockartigen Abkühlung sind beispielsweise eine direkte Kühlung mittels eines flüssigen oder eines gasförmigen Kühlmittels, wobei sich hier aus ökologischen und Kostengründen Wasser, welches beispielsweise mit Eis weiter gekühlt werden kann, ausgezeichnet eignet.

Die beschichtete Aluminiumfolie kann mit dem flüssigen Kühlmittel, vorzugsweise Wasser, auch besprüht werden. Schlussendlich kann es in gewissen Fällen auch ausreichen, die beschichtete Aluminiumfolie mittels eines vorzugsweise gekühlten Gases rasch abzukühlen.

Wie bereits erwähnt, wird das Verfahren bzw. die mit dem Verfahren hergestellte beschichtete Aluminiumfolie bevorzugt zur Herstellung von Verpackungen für feuchte Tiernahrung eingesetzt.

Zu den bevorzugten Verpackungen, die aus den kunststoffbeschichteten Aluminiumfolien hergestellt werden, zählen insbesondere die durch Umformung der beschichteten Aluminiumfolie herstellbaren halbstarren Behälter, insbesondere eine Dose oder Schale. Diese verfügen zweckmässigerweise über einen Verschluss in der Form eines auf dem Randbereich des Behälters aufgesiegelten Deckels, der bevorzugt ebenfalls aus einer mit dem erfindungsgemässen Verfahren hergestellten beschichteten Aluminiumfolie besteht. Wie oben erwähnt, eignen sich diese Verpackungen insbesondere für feuchte Tiernahrung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 die Herstellung einer beschichteten Aluminiumfolie;
- Fig. 2 einen Querschnitt durch einen schalenförmigen Behälter für Tiernahrung mit teilweise gelöstem Deckel.

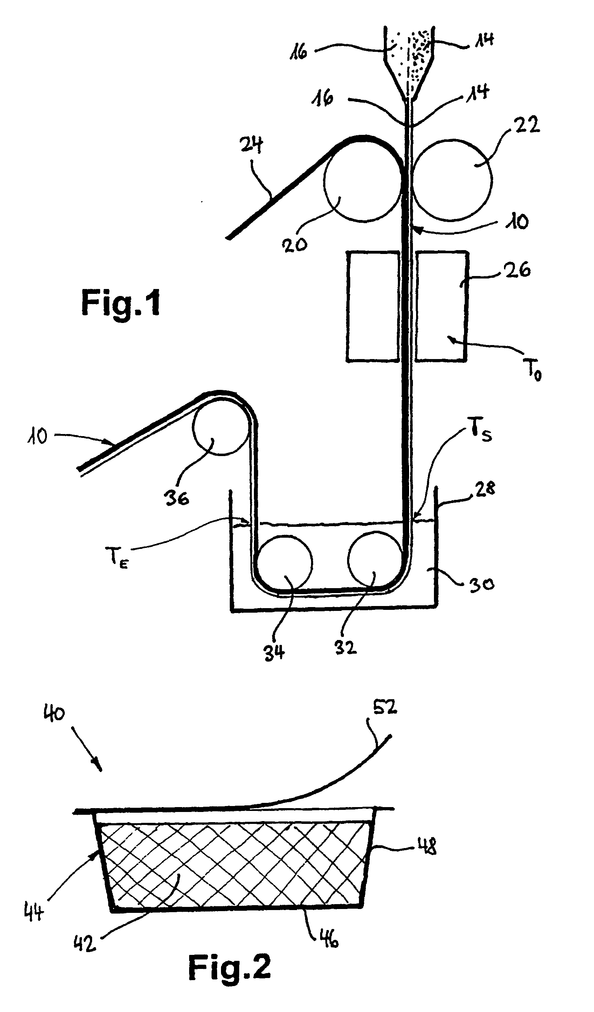

Die in Fig. 1 dargestellte Anordnung zeigt die wesentlichen Verfahrensschritte zur Herstellung einer beschichteten Aluminiumfolie 10. Eine aus der Düse 12 einer in der Zeichnung nicht wiedergegebenen Coextrusionsanlage austretende Coextrusionsschicht aus einem ersten Kunststoffanteil 14 aus beispielsweise Polypropylen (PP) und einem zweiten Kunststoffanteil 16 aus einem Haftvermittler, z.B. maleinsäuremodifiziertes PP, wird im Spalt eines Walzenpaares 20, 22 mit einer über eine der beiden Walzen 20 zulaufenden Aluminiumfolie 24 zusammengeführt. Die derart gebildete beschichtete Aluminiumfolie 10, welche noch keine zur Bildung einer Siegelnaht genügende Haftung zeigt, wird nach dem Austritt aus dem Walzenspalt durch einen Ofen 26 mit einer Innentemperatur T_{O} von beispielsweise 250°C geführt. Nach dem Austritt aus dem Ofen 26 wird die beschichtete Aluminiumfolie 10 über in einem Kühlmittelbehälter 28 angeordnete Umlenkrollen 32, 34, 36 durch ein Kühlmittel 30, beispielsweise eisgekühltes Wasser, geleitet. Die Temperatur T_{S} der beschichteten Aluminiumfolie 26 kurz vor dem Eintritt in das Kühlmittel 30, d.h. die Starttemperatur der schockartigen Abkühlung, entspricht praktisch der Ofenaustrittstemperatur von beispielsweise 230°C. Beim Austritt der schockgekühlten beschichteten Aluminiumfolie 10 aus dem Kühlmittel 30 beträgt die Temperatur T_{E}, d.h. die Endtemperatur der schockartigen Abkühlung, beispielsweise 70°C. Die derart hergestellte beschichtete Aluminiumfolie 10 wird anschliessend vor einer weiteren Verarbeitung, wie z.B. Lackieren und/oder Bedrucken der Aussenseite und Formen der Behälter zu einem in der Zeichnung nicht dargestellten Coil gewickelt. Das aussenseitige Lackieren und/oder Bedrucken kann grundsätzlich auch vor der Beschichtung der Innenseite durchgeführt werden.

Eine in Fig. 2 gezeigte Verpackung 40 für Tiernahrung 42 besteht aus einem schalenförmigen Behälter 44 mit einem Bodenteil 46 und einem von diesem aufragenden Wandteil 48, dessen oberer Rand 50 eine umlaufende Siegelfläche bildet. Auf diesem oberen Rand ist ein in der Figur teilweise entfernter Deckel 52 aus einer beschichteten Aluminiumfolie 10 aufgesiegelt. Der Basiskunststoff des Deckelmaterials besteht beispielsweise aus PP und ist im übrigen so modifiziert, dass sich der Deckel 52 vom Behälterrand 50 durch Peelen leicht entfernen lässt.

## Patentansprüche

1. Verfahren zur Herstellung einer mit siegel- und sterilisierbarem Kunststoff (14) auf der Basis von Polypropylen (PP) oder Polyethylen (PE) beschichteten Aluminiumfolie (10), wobei der Kunststoff (14) mit einem Haftvermittler (16) coextrudiert, die so erhaltene Kunststofffolie zwischen zwei Walzen (20,22) mit einer Aluminiumfolie (24) zusammengeführt und die derart coextrusionsbeschichtete Aluminiumfolie (10) abgekühlt wird,
**dadurch gekennzeichnet, dass**
der mit dem Haftvermittler (16) coextrudierte Kunststoff (14) unmittelbar nach der Coextrusion mit der Aluminiumfolie (24) zusammengeführt wird und die beschichtete Aluminiumfolie (24) zur Erhöhung der Haftfestigkeit zwischen der Aluminiumfolie (24) und der Kunststoffschicht (14) nachfolgend kontinuierlich einen auf einer Temperatur (T_{O}) von mindestens 20°C über dem Kristallitschmelzpunkt (T_{K}) des Kunststoffes (14) gehaltenen Ofen (26) durchläuft, so dass die Temperatur an der Oberfläche der Kunststoffschicht (14) und des Haftvermittlers (16) über dem Kristallitschmelzpunkt (T_{K}) des Kunststoffes (16) liegt und die derart wärmebehandelte beschichtete Aluminiumfolie (10) nach dem Austritt aus dem Ofen (26) zur Verminderung des kristallinen Anteils und der Grösse der Kristallkömer zumindest im Oberflächenbereich der abgekühlten Kunststoffschicht (14) von einer über dem Kristallitschmelzpunkt (T_{K}) des Kunststoffes (16) liegenden Starttemperatur (T_{S}) mit einer Abkühlungsgeschwindigkeit (v_{A}) grösser als 10°C/s schockartig auf eine mindestens 40°C unter dem Kristallitschmelzpunkt (T_{K}) liegende Endtemperatur (T_{E}) abgekühlt wird.

2. Verfahren nach Anspruch 1, **dadurch gekennzeichnet, dass** die Endtemperatur (T_{E}) der schockartigen Abkühlung mindestens 60°C, vorzugsweise mindestens 80°C unter dem Kristallitschmelzpunkt (T_{O}) des Kunststoffes (14) liegt.

3. Verfahren nach Anspruch 1 oder 2, **dadurch gekennzeichnet, dass** die Abkühlungsgeschwindigkeit (v_{A}) grösser als 50°C/s, vorzugsweise grösser als 100°C/s ist.

4. Verfahren nach einem der Ansprüche 1 bis3, **dadurch gekennzeichnet, dass** die schockartige Abkühlung der Kunststoffschicht (14) durch teilweise Umschlingung wenigstens einer gekühlten Walze (20,22) durchgeführt wird.

5. Verfahren nach einem der Ansprüche 1 bis 3, **dadurch gekennzeichnet, dass** die schockartige Abkühlung der Kunststoffschicht (14) durch direkte Kühlung mittels eines flüssigen oder gasförmigen Kühlmittels (30) durchgeführt wird.

6. Verfahren nach Anspruch 5, **dadurch gekennzeichnet, dass** die beschichtete Aluminiumfolie (10) durch ggf. eisgekühltes Wasser geleitet wird.

7. Verfahren nach Anspruch 5, **dadurch gekennzeichnet, dass** die beschichtete Aluminiumfolie (10) mit dem flüssigen Kühlmittel (30), vorzugsweise Wasser, besprüht wird.

8. Verfahren nach Anspruch 5, **dadurch gekennzeichnet, dass** die beschichtete Aluminiumfolie (10) mittels eines vorzugsweise gekühlten Gases abgekühlt wird.

9. Verfahren nach einem der Ansprüche 1 bis 8, **dadurch gekennzeichnet, dass** als Haftvermittler (16) haftungsfreudig modifizierte Co- oder Terpolymere mit Ethylen (E) oder Propylen (P) als einer der Monomerkomponenten, insbesondere E.AA, E.MAA, E.VA, E.MA, E.EA, E.nBA, E.CO, E.VA.CO, E.nBA.CO, E.AE.AA oder P.MAH eingesetzt werden, wobei AA Acrylsäure, AE Acrylester (MA, EA, BA), nBA n-Butylacrylat, CO Kohlenmonoxid, EA Ethylacrylat, MA Methylacrylat, MAA Methylacrylsäure, MAH Maleinsäureanhydrid und VA Vinylacetat bedeuten.

## Claims

1. Process for the production of an aluminium foil (10) coated with heat-sealable and sterilisable plastic (14) based on polypropylene (PP) or polyethylene (PE), the plastic (14) being coextruded with a coupling agent (16), the resulting plastic film being brought together with an aluminium foil (24) between two rolls (20, 22) and the aluminium foil (10) coextrusion-coated in this manner being cooled, **characterised in that** the plastic (14) coextruded with the coupling agent (16) is brought together with the aluminium foil (24) immediately after the coextrusion operation, the coated aluminium foil (24) then passes continuously through an oven (26) maintained at a temperature (T_{O}) of at least 20°C above the crystallite melting point (T_{K}) of the plastic (14), so that the temperature on the surface of the plastic layer (14) and of the coupling agent (16) is above the crystallite melting point (T_{K}) of the plastic (16), in order to increase the adhesion between the aluminium foil (24) and the plastic layer (14) and the coated aluminium foil (10) heat-treated in this manner is cooled suddenly from a start temperature (T_{S}) above the crystallite melting point (T_{K}) of the plastic (16) to an end temperature (T_{E}) at least 40°C below the crystallite melting point (T_{K}) at a cooling rate (v_{A}) of greater than 10°C/s after it emerges from the oven (26) in order to reduce the crystalline fraction and the dimensions of the crystalline grains, at least in the surface region of the cooled plastic layer (14).

2. Process according to claim 1, **characterised in that** the end temperature (T_{E}) of the sudden cooling is at least 60°C, preferably at least 80°C below the crystallite melting point (To) of the plastic (14).

3. Process according to claim 1 or claim 2, **characterised in that** the cooling rate (v_{A}) is greater than 50°C/s, preferably greater than 100°C/s.

4. Process according to one of claims 1 to 3, **characterised in that** the sudden cooling of the plastic layer (14) is carried out by partial wrapping around at least one cooled roll (20, 22).

5. Process according to one of claims 1 to 3, **characterised in that** the sudden cooling of the plastic layer (14) is carried out by direct cooling by means of a liquid or gaseous coolant (30).

6. Process according to claim 5, **characterised in that** the coated aluminium foil (10) is passed through possibly ice-cooled water.

7. Process according to claim 5, **characterised in that** the coated aluminium foil (10) is sprayed with the liquid coolant (30), preferably water.

8. Process according to claim 5, **characterised in that** the coated aluminium foil (10) is cooled by means of a preferably cooled gas.

9. Process according to one of claims 1 to 8, **characterised in that** copolymers or terpolymers modified to improve adhesion with ethylene (E) or propylene (P) as one of the monomer components, in particular E.AA, E.MAA, E.VA, E.MA, E.EA, E.nBA, E.CO, E.VA.CO, E.nBA.CO, E.AE.AA or P.MAH are used as the coupling agent (16), where AA is acrylic acid, AE is acrylate (MA, EA, BA), nBA is n-butyl acrylate, CO is carbon monoxide, EA is ethyl acrylate, MA is methyl acrylate, MAA is methacrylic acid, MAH is maleic anhydride and VA is vinyl acetate.

## Revendications

1. Procédé pour fabriquer un film d'aluminium (10) revêtu d'une matière synthétique (14) qui peut être stérilisée et scellée et qui est formée de polypropylène PP ou de polyéthylène PE, la matière synthétique (14) étant coextrudée avec un adhésif (16), le film en matière synthétique ainsi obtenu étant assemblé avec un film d'aluminium (24) entre deux cylindres (20, 22) et le film d'aluminium (10) ainsi revêtu par co-extrusion étant refroidi, **caractérisé en ce que** la matière synthétique (14) coextrudée avec l'adhésif (16) est assemblée avec le film d'aluminium (24) directement après la coextrusion et **en ce que** le film (24) d'aluminium passe ensuite de façon continue dans un four (26) maintenu à une température (T_{O}) d'au moins 20°C au-dessus du point de fusion (T_{K}) des cristallites de la matière synthétique (14) afin d'augmenter la force d'adhérence entre le film (24) d'aluminium et la couche (14) de matière synthétique, la température de la surface de la couche (14) de matière synthétique et de l'adhésif (16) étant supérieure à la température de fusion (T_{K}) des cristallites de la matière synthétique (16) et le film (10) d'aluminium revêtu traité à chaud de cette façon étant refroidi brusquement à une vitesse de refroidissement (V_{A}) supérieure à 10°C/s depuis une température de départ (T_{S}) supérieure au point de fusion (T_{K}) des cristallites de la matière synthétique (16) jusqu'à une température finale (T_{E}) située à au moins 40°C en dessous du point de fusion (T_{K}) des cristallites afin de réduire la teneur en cristaux et la taille des grains de cristaux au moins dans la région de surface de la couche de matière synthétique (14) refroidie.

2. Procédé selon la revendication 1, **caractérisé en ce que** la température finale (T_{E}) du refroidissement brusque est inférieure d'au moins 60°C et de préférence d'au moins 80°C au point de fusion (T_{O}) des cristallites de la matière synthétique (14).

3. Procédé selon la revendication 1 ou la revendication 2, **caractérisé en ce que** la vitesse (V_{A}) de refroidissement est supérieure à 50°C/s et de préférence supérieure à 100°C/s.

4. Procédé selon l'une des revendications 1 à 3, **caractérisé en ce que** le refroidissement brusque de la couche (14) de matière synthétique est effectué en enroulant celle-ci autour dune partie d'au moins un cylindre (20, 22) refroidi.

5. Procédé selon l'une des revendications 1 à 3, **caractérisé en ce que** le refroidissement brusque de la couche (14) de matière synthétique est effectué par refroidissement direct au moyen d'un fluide de refroidissement (30) liquide ou gazeux.

6. Procédé selon la revendication 5, **caractérisé en ce que** le film (10) d'aluminium revêtu est passé à travers de l'eau éventuellement refroidie à l'aide de glace.

7. Procédé selon la revendication 5, **caractérisé en ce qu'**un fluide (30) de refroidissement liquide, de préférence de l'eau, est pulvérisé sur le film (10) d'aluminium revêtu.

8. Procédé selon la revendication 5, **caractérisé en ce que** le film (10) d'aluminium revêtu est refroidi au moyen d'un gaz qui est de préférence refroidi.

9. Procédé selon l'une des revendications 1 à 8, **caractérisé en ce que** comme adhésif (16), on utilise des copolymères ou des terpolymères modifiés de façon à être adhésifs et qui comprennent l'éthylène (E) ou le propylène (P) comme un des monomères, en particulier l'E.AA, l'E.MAA, l'E.VA, l'E.MA, l'E.EA, l'E.nBA, l'E.CO, l'E.VA.CO, l'E.nBA.CO, l'E.AE.AA ou le P.MAH, étant entendu que AA représente l'acide acrylique, AE un acrylester (MA, EA, BA), nBA l'acrylate de n-butyle, CO le monoxyde de carbone, EA l'acrylate d'éthyle, MA l'acrylate de méthyle, MAA l'acide méthacrylique, MAH l'anhydride d'acide maléique et VA l'acétate de vinyle.
